# DEMANDE DE BREVET EUROPEEN

(11) **EP 1 568 801 A1**
(43) Date de publication de la demande: **31.08.2005**
(21) Numéro de dépôt: 05290431.5
(22) Date de dépôt: 24.02.2005
(51) Int. Cl.: C25B 1/30, C25B 11/06, H01M 4/90

(54) **Electrode à diffusion gazeuse, dispositif et procédé de production de peroxyde d'hydrogène**

(30) Priorité: 27.02.2004 FR 0402061
(71) Demandeur: Electricité de France, 75008 Paris (FR); Institut National de la Recherche Scientifique INRS, Quebec G1V 4C7 (CA)
(72) Inventeur: Chhim, Norinda, 77670 Saint Mames (FR); Trevin, Stéphane, 69210 Saint Bel (FR); Aliouane, Nadgi, 77670 Saint Mames (FR); Marcotte, Sébastien, Dollard des Ormeaux Quebec H2M 2M8 (CA); Guillet, Nicolas, Longueuil Quebec J4H 3G4 (CA); Roue, Lionel, Sainte Julie Quebec J3E 2J8 (CA); Dodelet, Jean-Pol, Sainte Julie Quebec J0L 2S0 (CA)
(74) Mandataire: Doressamy, Clarisse

(57) **Abrégé**

L'invention concerne un dispositif de production de peroxyde d'hydrogène comprenant une cellule électrochimique à deux compartiments qui comporte une anode, une cathode et un électrolyte aqueux, lesdits compartiments étant séparés par une membrane échangeuse d'ions, ladite cathode étant une électrode à diffusion gazeuse, ledit dispositif étant caractérisé en ce que ladite cathode comprend au moins un catalyseur à base de Co, N et C fabriqué à partir d'au moins un précurseur comprenant du cobalt et ne contenant pas d'azote tel que l'acétate de cobalt, ou bien un catalyseur comprenant un dérivé de 5,10,15,20 tétrakis (4-méthoxyphényl) 21H, 23H Porphyrine Cobalt II (ou CoTMPP), tel que sa teneur initiale en CoTMPP, en masse de cobalt sur le carbone, est inférieure ou égale à 0,5%, de préférence à 0,2%.

Procédé de mise en oeuvre d'un tel dispositif. Electrode à diffusion gazeuse comportant un tel catalyseur.

## Description

L'invention concerne une électrode à diffusion gazeuse comportant un catalyseur particulier parmi deux catalyseurs à base de Co, N et C, destinée principalement à la production de peroxyde d'hydrogène. L'invention concerne aussi un dispositif de production de peroxyde d'hydrogène. L'invention concerne enfin un procédé de production de peroxyde d'hydrogène, le plus souvent par la mise en oeuvre du dispositif selon l'invention.

Le peroxyde d'hydrogène, ou H₂O₂, appelé communément eau oxygénée, est un produit utile dans l'industrie chimique, de par ses propriétés d'amphotère d'oxydo-réduction. Il est le plus souvent devenu indispensable pour des traitements chimiques dans les domaines de l'alimentation, de la médecine, de l'industrie du bois (en particulier comme produit de blanchiment de la pâte à papier), des semi-conducteurs et du traitement des eaux. Des utilisations particulières en sont, par exemple, le nettoyage de parties électroniques et la stérilisation d'équipement médicaux. L'avantage d'un tel produit, notamment par rapport aux produits chlorés, est que son utilisation se fait de façon compatible avec les notions récentes de « développement durable », c'est-à-dire sans déchet difficile à recycler ni pollution difficile à contrôler.

A l'heure actuelle, le peroxyde d'hydrogène est très largement produit par un procédé dit à l'anthraquinone, qui est plus exactement un procédé d'auto-oxydation de l'anthrahydroquinone. Un tel procédé est coûteux du point de vue investissement, et n'est rentable pour des marchés non captifs que pour des productions supérieures ou égales à 50.000 t/an, c'est-à-dire de grosses unités. Se posent alors les problèmes du stockage et du transport du peroxyde d'hydrogène, du retraitement des catalyseurs utilisés dans un tel procédé, et de la mise en décharge de classe I des déchets non valorisables.

Lors de l'électrolyse de l'eau, quand de l'oxygène dissous ou gazeux est alimenté dans le compartiment cathodique, la réduction de l'oxygène tend préférentiellement à se produire à la place de celle de l'eau dans un domaine de potentiels caractéristiques suivant la nature du catalyseur utilisé. En contrôlant la réaction chimique à la surface de la cathode moyennant un catalyseur adapté ou moyennant une modification des caractéristiques de l'électrolyte, il est possible de produire du peroxyde d'hydrogène. C'est pourquoi des procédés électrochimiques ont été proposés dans lesquels les cathodes étaient des cathodes de type « trickle bed » (i.e. cathodes à lits granulaires), l'oxygène gazeux étant préalablement dissous en solution. De tels procédés conventionnels présentent l'inconvénient d'être de faible productivité, de par une limitation naturelle pour la mise en solution de l'oxygène, une consommation électrique élevée, et un encombrement important dû aux dispositifs de mise en solution de l'oxygène gazeux.

Plus récemment, dans la demande de brevet US 2003/0019758 ou la demande de brevet correspondante WO 03/010.360, il a été proposé d'améliorer les méthodes électrochimiques de production de peroxyde d'hydrogène, par deux solutions alternatives, dont l'une comprend l'utilisation d'une cathode à diffusion gazeuse en présence d'un électrolyte aqueux, ladite cathode étant catalysée par un catalyseur rédox éventuellement activé. Les catalyseurs rédox exemplifiés sont l'acide anthraflavique, éventuellement en mélange avec l'hydroquinone, l'azobenzène, le 6,13 pentacenequinone et l'activateur exemplifié est le poly (4-vinylpyridinium-p-toluène-sulfonate), ou PTPPTS, ce dernier étant donc en combinaison avec un des catalyseurs rédox exemplifiés cités. Si une telle solution doit théoriquement permettre de réaliser la synthèse de peroxyde d'hydrogène à des densités de courant d'au moins 50 mA/cm², une telle densité de courant atteint seulement 100 mA/cm² (ou 1000 A/m²) dans les exemples. Ces exemples sont uniquement réalisés avec une cathode à diffusion gazeuse catalysée par un des catalyseurs cités ci-dessus et activée par le PTPPTS, en présence d'électrolyte aqueux. En pratique, se posent des problèmes de faible productivité, de forte consommation électrique et de faible rendement faradique.

D'autre part, le brevet US-A-5.972.196 décrit un procédé électrochimique de fabrication d'ozone qui comprend l'utilisation d'une cellule électrochimique dont la cathode peut être à base de porphyrine tel que le 5,10,15,20 tétrakis (4-méthoxyphényl) 21H, 23H Porphyrine Cobalt II (ou CoTMPP), ou un de ses dérivés. La cathode peut comprendre du CoTMPP (voir exemple 3 colonne 20 ligne 30 à colonne 21 ligne 28) sur un support de catalyseur, mais à un taux relativement élevé : 10% en poids de catalyseur, i.e. 0,827% en poids de cobalt sur le poids de poudre de carbone (Vulcan® XC-72 de la société Cabot).

Le document CH-A-682.808 décrit aussi un catalyseur pour la réduction de l'oxygène caractérisé par le fait qu'il est constitué d'un complexe de métal de transition d'une porphyrine. Ladite porphyrine peut être du 5,10,15,20 tétrakis (4-méthoxyphényl) 21H, 23H Porphyrine Cobalt II (ou CoTMPP), ou un de ses dérivés. L'anode peut ainsi comprendre du CoTMPP, mais à un ratio massique très élevé : au maximum 1:1 en poids de catalyseur, i.e. de CoTMPP sur le poids de poudre de carbone (Vulcan® XC-72 de la société Cabot) supportant le catalyseur, soit 7,44% en poids de Co sur le poids de carbone.

Or le CoTMPP a l'inconvénient d'être un produit délicat à manipuler et surtout un produit cher.

C'est pour résoudre tous ces problèmes de l'art antérieur qu'une utilisation plus facile et moins coûteuse du CoTMPP, ou qu'une alternative à l'utilisation du CoTMPP, dans une électrode à diffusion gazeuse particulière, devait être trouvé.

L'invention concerne une électrode à diffusion gazeuse comprenant au moins une couche catalytique, au moins une couche support et au moins une couche hydrophobe, la couche support s'intercalant entre la couche catalytique et la couche hydrophobe, la couche catalytique comprenant au moins un catalyseur comprenant un dérivé de CoTMPP c'est-à-dire de 5,10,15,20 tétrakis (4-méthoxyphényl) 21H, 23H Porphyrine Cobalt II (ou CoTMPP), caractérisé en ce que la teneur initiale en CoTMPP, en masse de cobalt sur le carbone, est inférieure ou égale à 0,5%, de préférence strictement supérieure à 0 et au plus égale à 0,5%, de façon encore plus préférée strictement supérieure à 0 et au plus égale à 0,2%.

Par « comprend», on entend que le catalyseur est partiellement constitué, et par « dérivé de CoTMPP», on entend que le CoTMPP est un précurseur du catalyseur, le catalyseur étant généralement obtenu par traitements(s) à partir du CoTMPP, ainsi qu'il sera explicité ci-après. La teneur initiale de CoTMPP ou de Co par rapport au support carboné s'entend donc juste avant fabrication du catalyseur.

Ledit catalyseur, premier catalyseur selon l'invention, tel qu'il est préparé selon le protocole qui sera explicité ci-après en particulier dans les exemples 1 et 3, ne s'applique généralement qu'à la production de peroxyde d'hydrogène en milieu acide et en milieu alcalin.

L'invention concerne aussi une électrode à diffusion gazeuse comprenant au moins une couche catalytique, au moins une couche support et au moins une couche hydrophobe, la couche support s'intercalant entre la couche catalytique et la couche hydrophobe, caractérisée en ce que la couche catalytique comprend au moins un catalyseur à base de cobalt (Co), azote (N) et carbone (C), fabriqué à partir d'au moins un composant comprenant du cobalt et ne contenant pas d'azote.

Par « à base de cobalt (Co), azote (N) et carbone (C) », on entend selon l'invention contenant au moins les trois éléments suivants : Co, N et C. Un tel composant, dans des conditions adéquates telle qu'elles seront exemplifiées à l'exemple 4, se transforme en catalyseur comprenant Co, N et C. Un tel catalyseur est un deuxième catalyseur selon l'invention, car il n'est bien évidemment pas fabriqué à partir de CoTMPP.

Le composant comprenant du cobalt et ne contenant pas d'azote est différent du CoTMPP. Il est généralement soluble en milieu aqueux ou organique. De préférence, un tel composant comprend l'un au moins des composés suivants : CoCl₂, CoCO₃, Co(OH)₂, CoSO₄, CoAc, de façon encore plus préférée ledit composant comprend de l'acétate de cobalt (CoAc).

Le terme « électrode » est général. Il peut désigner soit une anode, soit une cathode. Lorsque nous évoquons le terme « cathode » ou « anode », dans le cas d'une électrolyse, nous précisons la polarité de l'électrode (la cathode sera reliée à la borne négative et l'anode à la borne positive d'un générateur de courant continu).

Une des deux électrodes selon l'invention sert avantageusement selon l'invention, dans le dispositif et le procédé selon l'invention, pour la production de peroxyde d'hydrogène.

Les deux électrodes selon l'invention, utilisées en cathode dans le cas de la production de peroxyde d'hydrogène, et le procédé et le dispositif selon l'invention vont avantageusement permettre d'augmenter la productivité de peroxyde d'hydrogène tout en diminuant la consommation énergétique. C'est un avantage tout à fait surprenant de l'invention, d'autant plus que le CoTMPP n'est pas utilisé comme précurseur de catalyseur (cas du deuxième catalyseur), ou est utilisé à très faible teneur (cas du premier catalyseur).

Le dispositif selon l'invention est un dispositif de production de peroxyde d'hydrogène H₂O₂, ledit dispositif comprenant au moins une cellule électrochimique qui comporte une anode et une cathode, ladite cellule électrochimique étant une cellule à deux compartiments, à savoir respectivement le compartiment anodique et le compartiment cathodique, lesdits compartiments étant chacun rempli d'un électrolyte aqueux, appelés respectivement anolyte et catholyte, et étant séparés par au moins une membrane échangeuse d'ions, ledit dispositif étant caractérisé en ce que ladite cathode est une des deux électrodes à diffusion gazeuse selon l'invention.

Typiquement, le premier catalyseur selon l'invention peut être un dérivé d'un complexe organométallique contenant du cobalt et de l'azote, tel que le CoTMPP (5,10,15,20 tétrakis (4-méthoxyphényl) 21H, 23H Porphyrine Cobalt II), ledit dérivé étant obtenu par exemple par pyrolyse du CoTMPP à une température de 600 à 1100°C en présence d'un gaz inerte tel que l'argon sur un support de carbone, tel que du Vulcan® XC-72 ou du Vulcan® XC-72R (de la société CABOT France), de façon plus préférée du Vulcan® XC-72R.

Le deuxième catalyseur selon l'invention peut être est fabriqué à partir d'au moins un précurseur à base de cobalt mais ne contenant pas d'azote tel que par exemple l'acétate de cobalt. Un tel précurseur, pyrolysé à une température de 600 à 1100°C en présence d'un gaz contenant de l'azote tel que l'ammoniac, sur un support de carbone tel que du Vulcan® XC-72 ou du Vulcan® XC-72R (de la société CABOT France), de façon plus préférée du Vulcan® XC-72R, permet la fabrication du deuxième catalyseur selon l'invention. Le deuxième catalyseur selon l'invention peut encore être fabriqué à partir d'au moins un précurseur à base de cobalt et ne contenant pas d'azote tel que par exemple l'acétate de cobalt, par pyrolyse à une température de 600 à 1100°C, en présence d'un gaz inerte tel que l'argon sur un support comportant du carbone et de l'azote tel que du Vulcan® XC-72 ou du Vulcan® XC-72R (de la société CABOT France), de façon plus préférée du Vulcan® XC-72R ayant préalablement subi une pyrolyse à une température de 600 à 1100°C en présence d'un gaz contenant de l'azote tel que l'ammoniac. Au final, selon les conditions de pyrolyse, le deuxième catalyseur selon l'invention, fabriqué par pyrolyse à partir d'au moins un précurseur de catalyseur, contient Co, N et C.

Avantageusement, le dispositif selon l'invention permet d'atteindre une gamme de densité de courant importante, typiquement une telle densité de courant est d'environ 100 à environ 300 mA/cm², soit d'environ 1000 à environ 3000 A/m². Ceci est particulièrement intéressant puisque la productivité de H₂O₂ est fonction de la densité de courant appliquée aux bornes dudit dispositif. Ceci est au moins rendu possible par la bonne performance du premier catalyseur et du deuxième catalyseur selon l'invention, et en particulier leur haute activité électrocatalytique permettant l'utilisation d'une faible quantité de catalyseur au sein du dispositif selon l'invention et leur haute sélectivité vis-à-vis de la réaction de réduction à 2 électrons de l'oxygène gazeux assurant au dispositif selon l'invention un excellent rendement faradique pour la production de H₂O₂. Un autre des avantages du dispositif selon la présente invention est que les propriétés électrocatalytiques de ladite cathode conduisent à une faible surtension d'activation cathodique ce qui assure une excellente efficacité énergétique au procédé.

Par cellule électrochimique, on entend selon l'invention, une alternance d'électrode positive ou anode, de séparateur, qui est ici la membrane échangeuse d'ions, et d'électrode négative ou cathode. Le dispositif selon l'invention peut comprendre plusieurs de ces alternances ou cellules électrochimiques.

Selon l'invention, l'électrode à diffusion gazeuse est généralement une électrode plane comprenant au moins une couche catalytique qui est généralement hydrophile, au moins une couche support, qui est généralement un tissu carboné ou un métal, et au moins une couche hydrophobe. La couche catalytique comprend au moins un catalyseur de réaction électrochimique ou catalyseur rédox, tel que décrit précédemment (premier ou deuxième catalyseur).

Le principe de fonctionnement d'une telle électrode est bien connu de l'homme du métier. C'est principalement la présence d'un des catalyseurs particuliers selon l'invention qui donne l'originalité à l'invention. Un tel type d'électrode est le plus souvent utilisé comme cathode à oxygène ou comme anode à hydrogène en présence de catalyseur approprié. Un tel type d'électrode est également utilisé dans le domaine des piles à combustible du type PEM-FC (acronyme de « Protons Exchange Membrane Fuel Cell ») ou AFC (acronyme de « Alkaline Fuel Cell »). Les deux couches planes, à savoir la couche hydrophile, ou couche catalytique, et la couche hydrophobe, sont reliées par une couche support qui s'intercale entre elles, sur une épaisseur totale de l'ensemble des trois couches comprise de 0,3 à 0,7 mm, par exemple de l'ordre d'environ 0,5 mm.

La couche hydrophobe, par laquelle un gaz réactif (O₂ gazeux dans le cas de la production de peroxyde d'hydrogène) est introduit au sein de l'électrode à diffusion gazeuse, est généralement principalement constituée d'un matériau poreux imperméable au liquide, inerte chimiquement et conducteur électrique. Elle vise donc à empêcher tout passage par capillarité de l'électrolyte, de façon à favoriser l'accès du gaz vers la couche catalytique. Elle comprend le plus souvent du carbone (généralement finement divisé, i.e. sous la forme de fines particules), de préférence du Vulcan® XC-72 ou du Vulcan® XC-72R (de la société CABOT France), de façon plus précise du Vulcan® XC-72R, et du liant généralement un polymère fluoro carboné tel que du PTFE (Poly Tétra Fluoro Ethylène), typiquement du Téflon® T-30 (de la société E.I. Du Pont). La quantité de PTFE conditionne le plus souvent son pouvoir hydrophobe. En effet il s'agit habituellement de trouver un compromis de façon à balancer l'hydrophobie et la chute ohmique qu'elle engendre. Une composition particulièrement préférée selon l'invention est constituée, en poids, d'environ 60 à environ 70% de carbone et d'environ 30 à environ 40% de liant.

La couche catalytique, ou hydrophile, doit généralement assurer la mise en contact des phases gazeuse (gaz provenant de la couche hydrophobe), liquide (électrolyte qui s'infiltre) et solide (matériaux constitutifs de la couche), afin que les réactions électrochimiques puissent avoir lieu. Elle comprend le plus souvent du carbone (généralement finement divisé), de préférence du Vulcan® XC-72 ou du Vulcan® XC-72R (de la société CABOT France), de façon plus préférée du Vulcan® XC-72R, du liant, généralement du PTFE, typiquement du Téflon® T-30, et du catalyseur. La quantité de liant est généralement plus faible que celle utilisée pour la couche hydrophobe.

De façon traditionnelle, un tel catalyseur est un métal finement divisé, par exemple du platine ou un mélange 50/50 en poids de platine et de palladium. Nous avons vu que dans la demande de brevet US 2003/0019758, un tel catalyseur peut comprendre un catalyseur rédox particulier. L'un des objets de la présente invention est que le catalyseur particulier selon l'invention comprend au moins du cobalt, de l'azote et du carbone, et est obtenu à partir de CoTMPP à faible teneur (premier catalyseur selon l'invention) ou ne comprend pas de CoTMPP (deuxième catalyseur selon l'invention). Une composition particulièrement préférée selon l'invention est constituée, lorsque l'électrolyse a lieu en milieu acide, d'un tissu de carbone de type Elat® (commercialisé par la société De Nora) sur lequel est déposé le premier ou deuxième catalyseur selon l'invention préalablement mis en suspension dans une solution aqueuse, alcoolique ou un mélange eau-alcool contenant ou non un liant. L'addition d'un liant permet avantageusement une meilleure homogénéisation de la suspension catalytique et assure un meilleur maintien du catalyseur sur le tissu de carbone. Ledit liant peut être un polymère non chargé tel que du PTFE (Poly Tétra Fluoro Ethylène) pour une production de H₂O₂ en milieu basique ou acide, un polymère échangeur de cations tel que du Nafion® pour une production de H₂O₂ en milieu acide ou polymère échangeur d'anions, renfermant généralement au moins un groupement du type-NR₃⁺, -NHR₂⁺, -NH₂R⁺ (Alkyl ammonium), -C₅H₄NH⁺ (Vinylpyridinium), -PR₃⁺ (Alkyl phosphonium) ou -SR₂⁺ (Alkyl sulfonium) ou autre, tel que du AHA®, AMH® ou bien ACM® pour une production de H₂O₂ en milieu basique. L'avantage d'utiliser un polymère non chargé ou neutre, en particulier du PTFE, est son faible coût d'achat, par rapport à un autre polymère tel que du Nafion®, ainsi que sa neutralité qui lui permet des usages plus standards c'est-à-dire indépendamment du caractère acide ou basique du milieu réactionnel.

La couche support, dont la présence est obligatoire, permet généralement de relier les couches catalytique et hydrophobe, et d'assurer la cohésion de l'électrode plane formée de l'ensemble. La composition est telle que la couche support comprend au moins un matériau conducteur électrique et inerte chimiquement. Ce matériau peut généralement être, soit un tissu carboné, soit une mousse métallique ou un métal déployé. Ladite couche support doit le plus souvent contribuer à la résistance mécanique de chacune des deux autres couches, avec une grande inertie chimique pour résister aux agressions possibles du milieu de réaction, et surtout assurer principalement la conduction électronique entre les couches catalytique et hydrophobe. De façon traditionnelle, ladite couche support est constituée principalement d'au moins une plaque poreuse en métal ou en métal déployé ou en mousse métallique. La tendance actuelle est d'utiliser au moins un tissu ou papier carboné, dont l'avantage est la bonne facilité de mise en forme alliée à la légèreté. Selon l'invention, une telle couche support est généralement en métal ou en tissu carboné.

Ainsi, l'électrode à diffusion gazeuse selon l'invention peut comprendre une couche support tel qu'un tissu carboné sur lequel l'on a appliqué sur une face un mélange constituant la couche hydrophobe, par exemple un mélange de Vulcan® XC-72R et de liant à base de PTFE, et sur l'autre face un mélangé pâteux constituant la couche catalytique, par exemple un mélange de Vulcan® XC-72R, de premier ou de deuxième catalyseur et de liant à base de PTFE. Une fois ladite couche support recouverte, on peut procéder soit à une opération de laminage à chaud, de préférence par exemple à une température voisine de la température de transition du PTFE, de l'ordre de 220 - 280°C, soit à une opération de pressage à chaud, jusqu'à l'obtention d'une épaisseur d'électrode de l'ordre de par exemple 0,5 mm. Il est ainsi obtenu une électrode à diffusion gazeuse selon l'invention, catalysée avec une certaine quantité de CoTMPP ou de (Co, N, C) par cm².

Le dispositif selon l'invention est généralement tel qu'il comporte en outre au moins une amenée de courant, appelée aussi collecteur de courant, pour l'électrode à diffusion gazeuse, par exemple plaquée contre la couche hydrophobe. Une telle amenée de courant peut être en métal déployé, ledit métal étant généralement choisi dans le groupe formé par l'argent, le tantale, le titane recouvert ou non d'au moins un oxyde mixte de métal précieux (IrO₂, RuO₂, ...), et de nickel.

Le plus souvent, l'anolyte et le catholyte sont, chacun indépendamment l'un de l'autre, choisis dans le groupe formé par la soude NaOH, la potasse KOH et l'acide sulfurique H₂SO₄. Ils peuvent aussi avantageusement selon l'invention être identiques. Plus généralement, le dispositif selon l'invention peut aussi bien fonctionner en milieu acide (pH généralement inférieur à 7) par exemple en présence d'acide sulfurique, qu'en milieu alcalin (pH généralement supérieur à 7), par exemple en présence de soude ou de potasse.

En effet, le peroxyde d'hydrogène produit par réduction électrochimique de l'oxygène sur les électrodes à diffusion gazeuse contenant un catalyseur à base de dérivé de CoTMPP ou de (Co, N, C) peut être oxydé à l'anode en O₂ selon la réaction : H₂O₂ + 2OH⁻ ⇔ O₂ + 2H₂O + 2e. En plus de cette réaction d'oxydation, le peroxyde d'hydrogène généré peut être décomposé naturellement en O₂. Ce qui engendre la diminution du rendement en courant (rendement faradique).

Pour pallier cette diminution de rendement, une cellule à 2 compartiments séparée par une membrane échangeuse d'ions a été utilisée selon l'invention. Pour ce qui concerne la nature de la membrane, elle dépend de la caractéristique du milieu réactionnel comme explicité précédemment. En effet, lorsque le milieu réactionnel a un caractère basique, une membrane échangeuse d'anions du type Tokuyama Neosepta AHA est utilisée. Dans le cas de la production en milieu acide, une membrane échangeuse de cations du type Nafion 117 est utilisée.

Dans cette cellule à 2 compartiments séparés par une membrane échangeuse d'ions, l'électrolyte en contact avec l'anode est appelé « anolyte » tandis que celui en contact avec la cathode (ici électrode à diffusion gazeuse) est appelé « catholyte ».

Plusieurs cas de figures peuvent se présenter, tels que représentés dans le tableau A et explicités ci-après :

**Tableau A**

| Nature de catholyte | Type de membrane échangeuse d'ions utilisée | Nature de l'anolyte |
|---|---|---|
| Basique (NaOH à 1,875 mol.L⁻¹) | Neosepta AHA® | Basique(NaOH à 1,875 mol.L-¹) |
| Basique (NaOH à 1,875 mol.L⁻¹) | Nafion® 117 | Acide (H₂SO₄ de 0,1 à 2 mol.L⁻¹) |
| Acide (H₂SO₄ de 0,1 à 2 mol.L⁻¹) | Nafion® 117 | Acide (H₂SO₄ de 0,1 à 2 mol.L⁻¹) |

### Cas catholyte basique/Neosepta AHA®/anolyte basique

La co-production de OH⁻ lors de la production de H₂O₂ en milieu basique (catholyte basique) engendre une variation de la composition du catholyte pouvant conduire à une augmentation de la tension aux bornes de la cellule électrochimique (la production de 1 mole de H₂O₂ engendre une co-production de 2 moles de OH⁻). L'utilisation d'une membrane échangeuse d'anions telle que le Neosepta AHA® permet avantageusement le passage de OH⁻ dans l'anolyte. Dans le compartiment anodique, les OH⁻ sont consommés par la réaction d'oxydation pour former l'oxygène et l'eau (20H⁻ ⇔ ½ O₂ + H₂O + 2e). Le passage de OH⁻ dans l'anolyte permet avantageusement d'une part le maintien de la composition de catholyte sensiblement constante et d'autre part la compensation du déficit en OH⁻ du à la réaction d'oxydation.

### Cas catholyte basique/Nafion® 117/anolyte acide

Dans ce cas, la production de H₂O₂ a toujours lieu en milieu basique, mais à la différence du cas précédent, l'anolyte a un caractère acide. Comme dans le cas précédent, la co-production de OH⁻ subsiste toujours. Cette fois, au lieu d'évacuer le surplus de OH⁻ vers le compartiment anodique (interdiction par la nature de la membrane Nafion® 117), le surplus de protons H⁺ générés par la réaction d'oxydation de l'eau (H₂O → ½ O₂ + 2H⁺ + 2e) est évacué vers le catholyte pour neutraliser la quantité de OH⁻ co-produite dans le catholyte.

### Cas catholyte acide/Nafion® 117/anolyte acide

La production de 1 mole de H₂O₂ en milieu acide nécessite la consommation de 2 moles de H⁺. Dans le compartiment anodique, la réaction d'oxydation de l'eau engendre la formation de 2 moles de H⁺. Le passage du surplus en protons H⁺ dans le compartiment cathodique permet un apport suffisant de protons pour la production de H₂O₂ (O₂(ad) + 2H⁺ + 2e- → H₂O₂).

La différence entre la production de peroxyde d'hydrogène en milieu acide et en milieu alcalin s'exprime généralement en stabilité du peroxyde d'hydrogène et en choix de matériaux d'anode.

En effet, le peroxyde d'hydrogène en milieu acide présente généralement une meilleure stabilité qu'en milieu alcalin (due à une dégradation plus lente de H₂O₂). Toutefois, en terme de productivité, le milieu acide présente généralement une productivité plus faible que le milieu alcalin.

D'autre part, le milieu acide permet un choix moins large de matériaux d'anode. En effet, compte tenu du caractère agressif du milieu acide, l'anode utilisée dans une cellule de production de peroxyde d'hydrogène est généralement en DSA® (pour "Dimensionally Stable Anode", ce terme est explicité ci-après), en PbO₂ ou en Pt.

Dans le cas de la production en milieu alcalin, le choix de matériaux d'anode est plus large. Une anode à base de nickel est souvent utilisée. Il est à noter que l'utilisation de ce matériau à base de nickel est moins coûteuse que celle du type DSA®. Ainsi, l'anode est généralement une anode massive, de préférence en nickel lorsque l'électrolyte est alcalin et de préférence en platine lorsque l'électrolyte est acide. Indépendamment du milieu, il est également possible d'utiliser une anode du type DSA® composée d'un mélange d'oxydes métalliques, typiquement à base d'oxydes de ruthénium et d'oxydes de titane.

L'anode peut être également une électrode à diffusion gazeuse telle que celles généralement utilisées comme anodes pour l'oxydation de l'hydrogène dans les piles à combustible.

Le terme DSA® est une marque déposée par la Société Diamond Shamrock Technologies. Une (électrode) DSA® est généralement principalement constituée d'un métal support à base de titane (ou un autre métal) recouvert d'un revêtement conducteur et chimiquement stable vis-à-vis de l'agressivité de l'électrolyte et vis-à-vis des produits de l'électrolyse. Elle est également stable du point de vue électrochimique, mécanique et thermique. En outre, le revêtement possède des propriétés électrocatalytiques induisant des surtensions très faibles. Parmi, les revêtements les plus couramment utilisés dans l'industrie de conversion électrochimique, on peut citer : IrO₂, RuO₂, etc.

Ledit revêtement comporte au moins un catalyseur pour la réaction électrochimique à réaliser (tels que métaux nobles ou leurs oxydes, céramiques etc.), au moins un stabilisateur pour assurer une bonne adhérence (tels que oxydes de métaux valves (c'est-à-dire des métaux qui se recouvrent d'une fine couche d'oxyde protecteur lorsqu'ils sont oxydés et qui ne laissent passer le courant que sous un potentiel cathodique) : TiO₂, ZrO₂, Ta₂O₅, Nb₂O₅), et au moins un agent dopant (notamment au moins Co, Ni, Pb, Sn, Mn, à l'état de métaux, d'alliages ou d'oxydes). Ce dernier agit généralement comme promoteur catalytique pour la réaction électrochimique désirée, comme poison vis-à-vis des réactions non désirées et accroît la conductivité électronique du revêtement. La préparation de ce revêtement comporte généralement l'application d'une solution contenant un ou plusieurs sels métalliques, suivie de la décomposition thermique de ces sels en présence d'oxygène afin de générer la couche d'oxyde recherchée.

Les DSA® se sont imposées industriellement le plus souvent pour l'électrolyse des solutions de NaCl, en remplacement du graphite, dans les cellules de production de chlore, d'hypochlorite, de chlorate et de perchlorate.

Ainsi qu'il a été explicité, l'utilisation d'une anode en Nickel en milieu alcalin est plus économique que la DSA® utilisée en milieu acide. Ceci constitue l'un des avantages de la production en milieu alcalin qui est donc préféré selon l'invention par rapport au milieu acide.

Le plus souvent, la membrane échangeuse d'ions (échangeuse de cations pour la production de H₂O₂ en milieu acide, échangeuse d'anions pour la production de H₂O₂ en milieu alcalin) doit présenter une bonne tenue chimique et également une bonne conductivité ionique. Compte tenu de ces exigences, le matériau principal constitutif de la membrane doit généralement résister d'une part à l'agressivité du milieu réactionnel (acide ou basique) et d'autre part au pouvoir oxydant du peroxyde d'hydrogène.

La membrane échangeuse d'ions est généralement et de préférence choisie dans le groupe formé par les membranes échangeuses de cations du type Nafion® 115 ET Nafion® 117 et les membranes échangeuses d'anions du type Neosepta AHA® ou AMH® ou ACM®.

Dans le cas de la production en milieu acide, une membrane échangeuse de cations du type Nafion® 115, Nafion® 117 ou autre, comportant généralement des groupements échangeurs sulfoniques (SO₃), peut être utilisée. Lorsque la production du peroxyde d'hydrogène a lieu en milieu alcalin, une membrane échangeuse d'anions du type Neosepta AHA® ou AMH® ou ACM®, de la société Tokuyama ou autre peut être utilisée.

Avantageusement, le dispositif selon l'invention comprend au moins un conduit d'alimentation d'au moins une source gazeuse d'oxygène gazeux et au moins un conduit de sortie de gaz. La source gazeuse d'oxygène gazeux est typiquement de l'oxygène gazeux ou de l'air purifié.

L'invention concerne aussi un procédé de réalisation d'un dispositif selon l'invention comprenant la fabrication de l'électrode à diffusion gazeuse, ladite fabrication comprenant l'incorporation du catalyseur dans une couche catalytique de ladite électrode.

La fabrication d'une électrode à diffusion gazeuse selon l'invention se fait de façon classique ainsi qu'expliquée précédemment, avec la particularité que le catalyseur introduit durant ladite fabrication est le catalyseur particulier à base de dérivé de CoTMPP ou de cobalt, d'azote et de carbone selon l'invention. Ainsi les constituants préalablement préparés, étant par exemple sous forme pâteuse, sont généralement appliqués sur une couche support puis fixés par au moins un processus de fixation choisi dans le groupe formé par le pressage à chaud, le pressage à froid, et le laminage. A cet égard il convient de signaler que divers procédés de fabrication d'électrodes à diffusion gazeuse sont déjà utilisés au niveau industriel, des variantes de fabrication concernant la préparation de la matière première qu'est le mélange de carbone finement divisé et de liant, et l'introduction du catalyseur, généralement sous forme métallique finement divisée ou sous forme d'un sel métallique précurseur, de préférence sous forme métallique finement divisée. On peut se référer par exemple à la méthode générale de fabrication proposée par *MOTOO S. et col.*, *Gas diffusion electrode of high performance*, *J. Electroanal. Chem., 1984, 160, 351-357.* Pour la fabrication de la couche catalytique selon l'invention, le catalyseur comme décrit précédemment, mélangé aux autres éléments constitutifs de la couche catalytique de l'électrode, par exemple en solution (dispersion de liant tel que le Téflon® et solvant), pour former une pâte destinée à être appliquée sur le tissu carboné ou le métal, par exemple sous forme grillagé, qui peut constituer la couche support. Ceci sera explicité dans l'exemple 1 ci-après.

L'invention concerne enfin un procédé de production de peroxyde d'hydrogène comprenant la mise en oeuvre du dispositif selon l'invention.

Le peroxyde d'hydrogène fabriqué selon le procédé de l'invention a généralement une concentration de 1 à 6 % (en poids). Il est possible dans le cadre de l'invention de disposer d'un dispositif d'extraction venant s'ajouter au sein du dispositif précédemment décrit, de façon à obtenir une concentration finale en peroxyde d'hydrogène plus élevée.

L'invention sera mieux comprise et d'autres caractéristiques et avantages apparaîtront à la lecture de la description qui va suivre, donnée à titre non limitatif, par référence aux figures 1 à 9.

La figure 1 représente schématiquement une vue en coupe ou de profil, d'une électrode 2 à diffusion gazeuse selon l'invention.

La figure 2 représente schématiquement une vue d'un dispositif 1 selon l'invention, en coupe partielle, II-II, pour la production de peroxyde d'hydrogène.

La figure 3 représente schématiquement une vue de droite, selon III-III, sous forme partielle de figure éclatée, du même dispositif 1 selon l'invention, mais dans laquelle une grande partie des pièces de visserie telles que tiges filetées et rondelles a été omise pour augmenter la lisibilité du coeur du dispositif.

La figure 4 représente schématiquement une vue d'ensemble d'un ensemble 12 de production de peroxyde d'hydrogène.

La figure 5 représente des courbes d'évolution de la concentration en H₂O₂ en fonction de la durée de l'électrolyse pour différentes quantités de Cobalt (Co) par cm².

La figure 6 représente schématiquement une vue en coupe d'une électrode 100 selon l'invention.

La figure 7 représente des courbes de polarisation en milieu H₂SO₄ (0,1 mol/L) sur électrode à diffusion gazeuse contenant différentes teneurs en Cobalt.

La figure 8 représente des courbes de vitesses de production (Vₚ) d'eau et de peroxyde d'hydrogène après une heure d'électrolyse à -150mV/ECS, en milieu H₂SO₄ (0,1 mol/L) sur électrode à diffusion gazeuse contenant différentes teneurs en Cobalt.

La figure 9 représente des courbes de polarisation (2 mV/s) en milieu H₂SO₄ (0,1 mol/L) sur électrode à diffusion gazeuse catalysée avec acétate de cobalt /Vulcan® XC-72R pyrolysé sous NH3 (113) vs. électrode à diffusion gazeuse catalysée avec CoTMPP/ Vulcan® XC-72R pyrolysé sous argon (112).

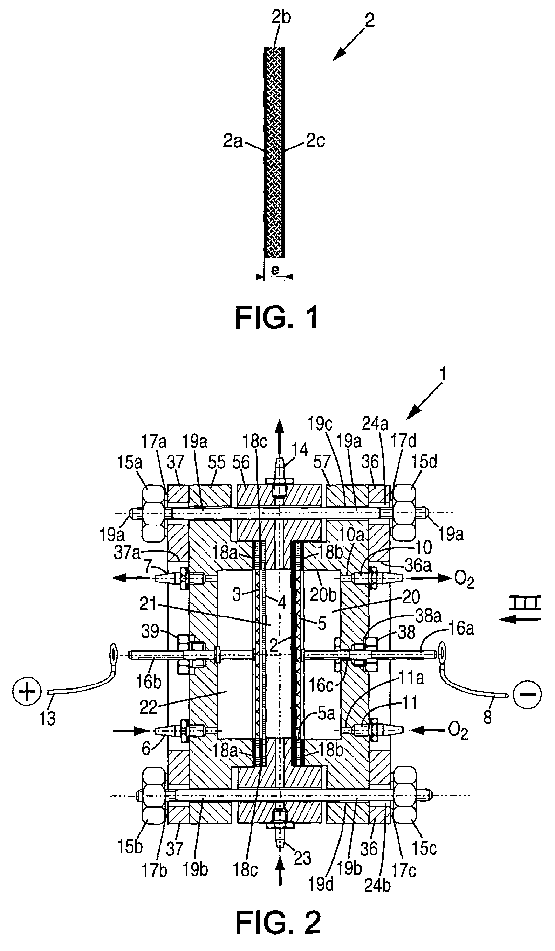

La figure 1 représente schématiquement une vue en coupe d'une électrode 2 à diffusion gazeuse selon l'invention. On distingue une couche catalytique, ou couche hydrophile, 2a qui est selon l'invention à base de Co, N et C, de préférence du CoTMPP, une couche support 2b, par exemple en tissu carboné, et une couche hydrophobe 2c. L'épaisseur e de ladite électrode est typiquement de 0,5 mm.

La figure 2 représente schématiquement une vue d'un dispositif 1 selon l'invention, en coupe partielle, II-II, pour la production de peroxyde d'hydrogène. Le dispositif 1 comprend une anode 3, par exemple en DSA si le milieu électrolytique est acide, un compartiment 22 anolytique pour l'anolyte, un compartiment 21 catholytique pour le catholyte, un compartiment 20 gazeux pour le gaz qui est de l'oxygène O₂, une membrane 4 échangeuse d'ions, et une cathode 2, qui est l'électrode 2 de la figure 1.

L'anode 3 peut être DSA®, si la l'anolyte est un électrolyte acide. Dans ce cas, la membrane 4 échangeuse de cations utilisée est du type Nafion® 115 ou Nafion® 117.

L'anode 3 peut être à base de Nickel, si l'anolyte est un électrolyte basique. Dans ce cas, la membrane 4 échangeuse d'anions utilisée est du type Neosepta AHA® (commercialisée par la société Tokuyama).

Typiquement l'anode 3 est une rondelle 3 d'épaisseur de l'ordre de 1 à 2 mm. Le centre de ladite rondelle (surface potentiellement vide) détermine la surface de travail de l'anode 3. Un grillage métallique (représenté par des croix) de petits maillons est généralement soudé au centre de ladite rondelle 3 par un procédé approprié, tel qu'un procédé de soudure par point sous flux d'argon ou par un procédé de soudure au plasma.

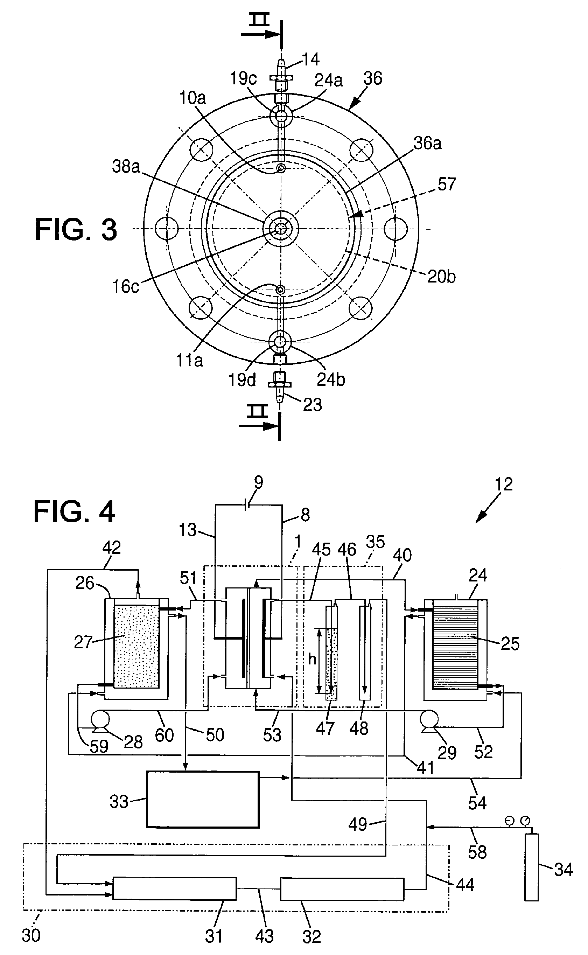

On distingue une pièce d'injection 6 d'alimentation en anolyte, l'anolyte étant évacué du compartiment 22 par une pièce d'injection 7, une pièce d'injection 23 d'alimentation en catholyte, le catholyte étant évacué du compartiment 21 par une pièce d'injection 14, une pièce d'injection 11 d'alimentation en gaz (O₂), ledit gaz étant évacué du compartiment 20 par une pièce d'injection 10. Le peroxyde d'hydrogène produit par le dispositif 1 est dissous dans le catholyte et ainsi évacué par la pièce d'injection 14. D'autre part la pièce d'injection 11 alimente la cathode 2, côté couche hydrophobe 2c, en oxygène gazeux O₂, le gaz n'ayant pas réagi étant ensuite évacué par la pièce d'injection 10, puis il est préférentiellement recyclé pour alimenter à nouveau la cathode 2 à diffusion gazeuse (voir figure 4).

On distingue aussi un collecteur de courant 5 à plaque métallique. Ladite plaque 5 peut être en nickel, en acier inoxydable, ou bien en tantale suivant la nature du catholyte utilisé pour la production de peroxyde d'hydrogène. Ladite plaque 5 métallique est de forme annulaire (représentée par des rayures) ; typiquement elle est une rondelle 5 d'épaisseur de l'ordre de 1 à 2 mm. Le centre de ladite rondelle (surface potentiellement vide) détermine la surface de travail de l'électrode 2 à diffusion gazeuse. Un grillage métallique (représenté par des croix) de petits maillons est généralement soudé au centre de ladite rondelle 5 par un procédé approprié, tel qu'un procédé de soudure par point sous flux d'argon ou par un procédé de soudure au plasma. Ledit grillage métallique sert d'une part de contact électrique afin de mieux répartir la distribution du courant électrique et d'autre part de maintien de l'électrode 2 à diffusion gazeuse en cas d'une éventuelle surpression provenant d'un côté d'anolyte où de catholyte. Ledit grillage métallique est soudé au centre de la rondelle 5.

Le bord inférieur 5a de la rondelle 5 sert de surface d'appui à un joint d'étanchéité 18b, de forme annulaire et représenté en noir avec un espace vide au centre. Au centre de la rondelle 5 et sur le grillage métallique est soudée une tige filetée 16a servant de liaison avec le câble d'alimentation électrique 8. L'étanchéité entre la tige filetée 16a et la pièce 57 est assurée par un système de presse-étoupe comportant l'écrou 38 associé à une ouverture 38a dans la pièce 57. Tous les compartiments 22, 21 et 20 sont de forme cylindrique ainsi qu'il est vu sur la figure 3 ; la périphérie du compartiment cylindrique 20 est indiquée par la référence 20b. Le joint d'étanchéité sous la forme d'un anneau 18b est présent du côté de la cathode 2. Deux joints d'étanchéité 18a et 18c sont présents du côté de l'anode 3, chacun de forme annulaire et représenté en noir avec un espace vide au centre. Les compartiments 20, 21 et 22 sont maintenus par trois pièces 55, 56, et 57 qui sont elles-mêmes maintenues par deux brides ou plaques de serrage 36 et 37, et par huit tiges telles que les tiges 19a et 19b, lesdites tiges étant maintenues à chaque extrémité ; la tige 19a est maintenue par deux écrous de serrage 15a et 15d auxquels sont associés respectivement deux rondelles de serrage 17a et 17d, de même la tige 19b est maintenue par deux écrous de serrage, 15b et 15c, auxquels sont associés deux rondelles de serrage respectivement 17b et 17c. La pièce 36 comporte deux ouvertures 24a et 24b pour le passage des tiges respectives 19a et 19b. Lesdites tiges 19a et 19b sont stabilisées dans lesdites ouvertures 24a et 24b par des manchons de guidage (non représentés), au titre d'un manchon de guidage par tige et donc par ouverture.

La présence associée des plaques de serrage métalliques 36 et 37 permet d'éviter une trop grande pression mécanique sur les compartiments 20, 21 et 22 et également de mieux répartir la pression de serrage. Ainsi qu'on le voit plus aisément sur la figure 3 pour la pièce 36, lesdites deux pièces 36 et 37 sont évidées respectivement par des formes 36a et 37a qui permettent l'accès direct aux pièces d'injection. La pièce 57 comporte les ouvertures respectives 10a et 11a destinés à recevoir les pièces respectives 10 et 11.

Ce dispositif est mieux explicité sur la figure 3 sur laquelle on voit les alésages respectifs 19c et 19d destinés à accueillir les tiges respectives 19a et 19b, et l'alésage 16c destiné à recevoir une tige 16a. On distingue aussi sur la figure 3 l'ensemble des autres positionnements / emplacements de rondelles et d'écrous de serrage qui sont ou ne sont pas visibles sur la figure 2.

Enfin le serrage et la connexion électrique centrale sont assurés au moyen de deux tiges 16a et 16b, chacune des deux tiges 16a et 16b étant solidaire au centre du collecteur 5 par soudure, les deux tiges étant telles qu'elles sont reliées aux câbles électriques respectivement 8 et 13 ; des écrous respectifs 38 et 39 permettent de maintenir l'ensemble.

La figure 3 représente schématiquement une vue de droite, selon III-III, du même dispositif 1 selon l'invention.

Ainsi qu'il a été explicité précédemment, La figure 3 représente schématiquement une vue de droite, selon III-III, sous forme partielle de figure éclatée, du même dispositif 1 selon l'invention, mais dans laquelle une grande partie des pièces de visserie telles que tiges filetées et rondelles a été omise pour augmenter la lisibilité du coeur du dispositif. On y distingue les pièces 14, 57, 36 et 23, ainsi, que les emplacements 19c, 19d, 16c, 11a, 10a, 24a et 24b, et les périphéries 36a et 20b.

La figure 4 représente une vue d'ensemble d'un ensemble 12 de production de peroxyde d'hydrogène selon l'invention. On y a indiqué l'emplacement du dispositif 1 des figures 2 et 3. Un dispositif 35 est un générateur de surpression comprenant les pièces 47 et 48, la pression étant gérée par la hauteur h, un conduit 46 reliant les pièces 47 et 48, et un conduit 45 permettant de relier la sortie de l'oxygène du dispositif 1 à l'entrée dudit générateur de surpression 35. La sortie 49 du générateur de surpression 35 est reliée à un dispositif 30 de recyclage d'oxygène. Le dispositif 30 de recyclage d'oxygène comprend un dispositif 31 de séchage d'oxygène et un dispositif 32 de compression, lesdits deux dispositifs 31 et 32 étant reliés par un conduit 43. Le dispositif 30 de recyclage d'oxygène est alimenté par un conduit 42 et par le conduit 49 précédemment indiqué. Ledit conduit 42 collecte donc l'oxygène provenant d'un réservoir 26 anolytique. Cet oxygène est généré par une réaction d'oxydation de l'eau. Un conduit 44 est un conduit de sortie dudit dispositif 30 de recyclage d'oxygène. Toutefois, il peut y être ajouté par un conduit 58 de l'oxygène d'appoint fourni par un dispositif 34 d'appoint à l'oxygène qui est ici tout simplement une bombonne 34. On distingue aussi un réservoir 26 d'anolyte à double enveloppe et un réservoir 24 de catholyte à double enveloppe. L'anolyte et le catholyte sont représentés respectivement par les références 27 et 25. Les circulations respectives d'anolyte 27 et de catholyte 25 entre les réservoirs respectifs 26 et 24 et le dispositif 1 sont indiquées de la façon suivante : l'anolyte 27 sortant par un conduit 51 du dispositif 1 entre dans le réservoir 26 d'anolyte puis ressort dudit réservoir 26 par un conduit 59 vers une pompe 28 de circulation d'anolyte 27 puis un conduit 60 le ramène au dispositif 1. De même, le réservoir 24 de catholyte 25 est alimenté par un conduit 40 en catholyte 25 sortant du dispositif 1. Le catholyte 25 sort ensuite dudit réservoir 24 par un conduit 52 jusqu'à une pompe 29 de circulation de catholyte 25 puis, il retourne vers le dispositif 1 par un conduit 53. La température des anolytes 27 et catholytes 25 est gérée par le générateur 33 qui est alimenté par un conduit 50 par un fluide caloporteur (non représenté) qui circule dans une double enveloppe du réservoir 26 d'anolyte 27, ledit fluide caloporteur circulant ensuite dans un conduit 54 puis dans une double enveloppe du réservoir 24 de catholyte 25. Le fluide caloporteur qui sort du réservoir 24 de catholyte 25 par un conduit 41 alimente la double enveloppe du réservoir 26 d'anolyte 27 en fluide caloporteur. Le dispositif 1 est alimenté en courant par un générateur 9 de courant auxquels sont reliés les câbles électriques 13 et 8 déjà indiqués au niveau du dispositif 1.

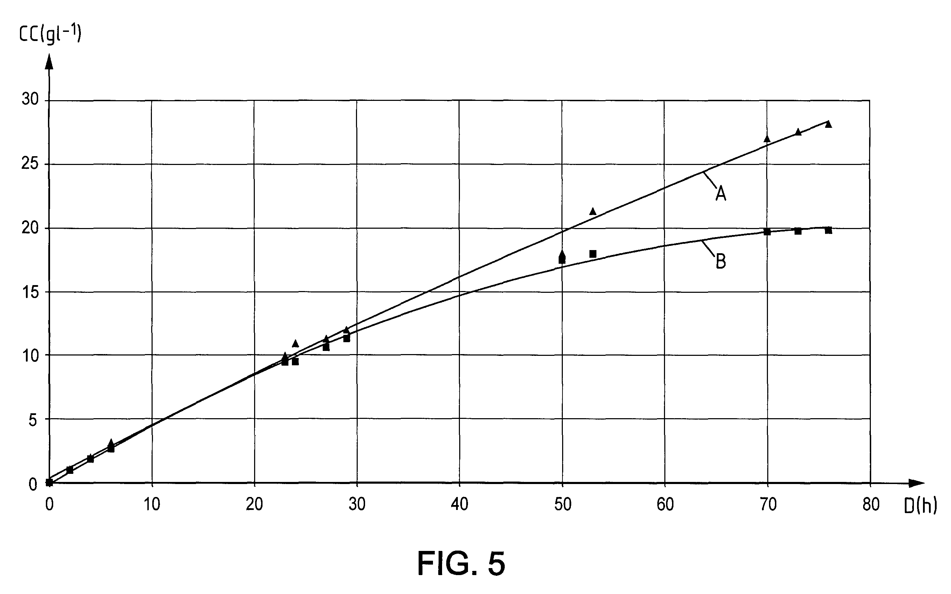

La figure 5 est explicitée ci-après dans l'exemple 2.

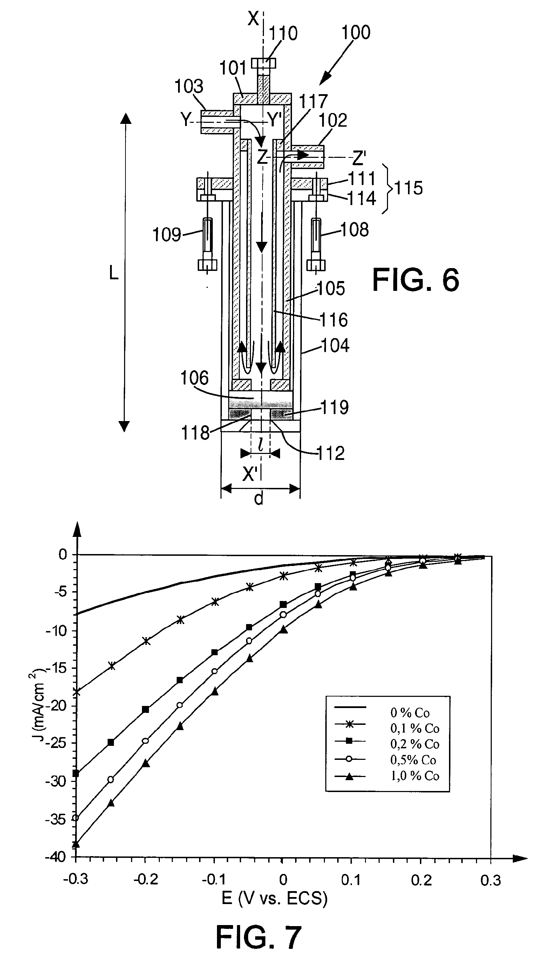

La figure 6 représente schématiquement une vue en coupe d'une autre électrode 100 selon l'invention, de type sonde. Par convention, la partie supérieure d'électrode 100 est la partie placée vers le haut de la figure 6. La partie inférieure de l'électrode 100 est destinée à être baignée dans de l'électrolyte.

L'électrode 100 comporte un corps sensiblement cylindrique 105, creux, d'axe (X'X), et qui se termine à son extrémité supérieure par un disque 101 percé en son centre par une pièce 110 de connexion électrique 101, qui l'obture. Le corps 105 et les pièces de connexion électrique sont par exemple en acier inoxydable. L'extrémité inférieure du corps 105 est enveloppée par un corps cylindrique externe 104 qui est lui aussi d'axe (X'X), le plus souvent en isolant électrique tel que le PVC. Les deux corps 104 et 105 sont fixés l'un par rapport à l'autre par deux parties respectives 114 et 111 formant couronne 115, qui sont assemblées par deux vis 108 et 109.

Le corps 105 comporte en sa partie supérieure une buse d'entrée de gaz 103, d'axe (Y'Y) perpendiculaire à l'axe (X'X), située tout à côté de l'extrémité supérieure 101 du corps cylindrique 105, et une buse de sortie 102 de gaz, d'axe (Z'Z) perpendiculaire à l'axe (X'X) et parallèle à l'axe (Y'Y), située sensiblement plus bas que la buse d'entrée 103. Une pièce 116 cylindrique creuse d'axe (X'X), interne au corps 105, et montée dans ledit corps 105 par une couronne 117, permet la circulation du gaz. Les flèches indiquent le sens de circulation du gaz, depuis la buse 103 d'entrée. Le gaz peut ainsi descendre au coeur du cylindre 116 puis remonter en périphérie du cylindre 105, entre les cylindres 116 et 105, jusqu'à la buse de sortie 102, vers laquelle la présence de la couronne 117 le guide.

Le disque catalytique 106 de l'électrode 100 est un disque plein, qui obture le bas du corps 105 et qui est inséré dans le corps 104. Un tel disque 106 est par exemple d'épaisseur 0,36 mm et de diamètre 10 mm, en Elat® (qui inclut une couche support et une couche hydrophobe) sur lequel, sur la face du dessous, se trouve une couche catalytique selon l'invention, par exemple de CoTMPP sur Vulcan® XC-72R pyrolysé. Juste au-dessous de ce disque 106 se trouve un joint 119 en forme de couronne, par exemple en Vitton®, de diamètre extérieur identique à celui du disque 106 catalytique, et de diamètre intérieur (correspondant au diamètre 1 d'une partie creuse centrale) par exemple de 4 mm. Le joint 119 reposé sur le fond du corps 104. L'extrémité inférieure du corps 104, située juste au-dessous du joint 119, comporte une partie centrale évidée de forme tronconique 112, qui relie la partie creuse 118 du joint 107 à l'extérieur de l'électrode 100. une couche support 2b, par exemple en tissu carboné, et une couche hydrophobe 2c.

La longueur L totale entre l'entrée de gaz 103 et l'extrémité inférieure du corps cylindrique 104, est de 150 mm. Le diamètre d extérieur du corps 104 est sensiblement égal à 15 mm.

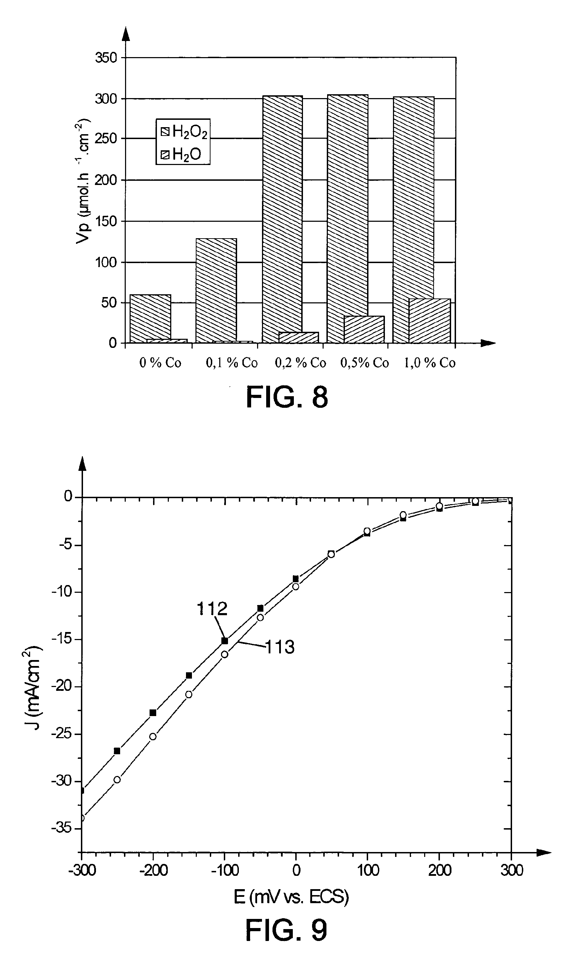

Les figures 7 et 8 sont explicitées ci-après dans l'exemple 3.

La figure 9 est explicitée ci-après dans l'exemple 4.

### EXEMPLES

Les exemples qui suivent illustrent l'invention sans pour autant en limiter la portée.

### Exemple 1 : Préparation de la cathode 2 à diffusion gazeuse selon l'invention, et en particulier fixation de catalyseur CoTMPP sur un support carbone Vulcan® XC-72R.

### 1 a) Préparation de poudre catalytique

La préparation du catalyseur a été réalisée à partir de CoTMPP ou 5, 10, 15, 20 Tetrakis (4-MethoxyPhenyl) - 21H, 23H Porphine de Cobalt (II), noté CoTMPP, déposé sur du carbone Vulcan® XC 72R. Une préparation de base a été réalisée, comportant 0,2% en masse de cobalt sur le carbone (ce pourcentage peut être augmenté en fonction de la quantité finale de matériau souhaitée dans l'électrode).

Les détails de la préparation du matériau pour 1g de carbone Vulcan® XC-72R avec 0,2% en masse de cobalt sont les suivants :
- on dispose de 1g de carbone Vulcan® XC-72R (de la société Cabot France).
- on dispose de 2 mg de Co, soit 3,39 10⁻⁵ moles, sous la forme de CoTMPP. La masse molaire du CoTMPP étant égale à 791,78 g/mole, cela correspond donc à 26,87 mg de CoTMPP commercial (société Aldrich Chem. Co) dans le Vulcan® XC-72R.
- 50ml d'acétone sont introduits dans le mélange (26,87 mg CoTMPP + 1g Vulcan® XC-72R), formant un mélange.
- homogénéisation du mélange pendant 2 heures dans un bain à ultrasons ou sous agitation magnétique.

Après une nuit d'évaporation du solvant à température ambiante (environ 20°C) ou à 70°C, le matériau subit le traitement suivant :
- broyage grossier des agglomérats de poudre à l'aide d'un pilon dans un mortier en verre
- dépôt de la poudre dans un récipient en quartz
- mise en place dans la cellule de pyrolyse sous atmosphère inerte (flux d'argon de 30 Nl/h, rotamètre Matheson 602) pendant 30mn à température ambiante. Cette étape a généralement pour but d'éliminer une partie de l'oxygène et de la vapeur d'eau adsorbés sur le matériau et qui pourraient contribuer à former des oxydes durant la pyrolyse.
- pyrolyse dans un four tubulaire sous un flux d'argon de 12Nl/h :
   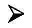 30 mn de montée en température (température ambiante -> 900°C)
   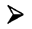 2h de palier à 900°C
   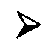 15 mn de refroidissement avec four ouvert
- second broyage grossier des poudres dans le mortier en verre.
- stockage de la poudre dans un pilulier.

Deux méthodes électrochimiques peuvent être généralement utilisées pour le contrôle de la qualité de la préparation de poudre catalytique ; une méthode mettant en oeuvre l'usage d'une électrode tournant à disque-anneau (ETDA), ou une méthode mettant en oeuvre l'usage d'une sonde de caractérisation (cette sonde de caractérisation est typiquement l'électrode 100 représentée sur la figure 6). L'ensemble des contrôles de qualité de la poudre catalytique est effectué en utilisant un électrolyte approprié, de type H₂SO₄ ou NaOH suivant les électrolyses envisagées. Les inventeurs de la présente invention ont préféré la seconde méthode, sans que cela soit une préférence contraignante. Quelle que soit la méthode utilisée, le contrôle est généralement réalisé en déposant la poudre catalytique (Co, N, C) sur la surface d'un dispositif de contrôle. Pour ce faire, une étape de préparation de la poudre à contrôler s'impose généralement. En effet, pour que le contrôle soit reproductible, un protocole de préparation de la suspension catalytique doit être mis en oeuvre. L'homme du métier est à même, de par ses connaissances, de mettre au point un protocole reproductible qui lui permet une analyse comparative. L'ensemble des contrôles de qualité de catalyseur a généralement été réalisé par des tracés de courbes voltampérométriques avec balayage linéaire en potentiel dans un domaine de réduction de l'oxygène. Avant chaque tracé de voltampérogramme, un tracé à blanc a été préalablement réalisé (la réduction de l'oxygène sur le support exempte de toute trace de catalyseur). La superposition des voltampérogrammes relatifs au support seul et au support recouvert de dépôt catalytique permet une évaluation de la performance de poudre catalytique.

La poudre catalytique obtenue, un catalyseur à base de CO, N et C, renfermant 2 mg de Co fixé sur du Vulcan® XC-72R, est une poudre mère. Cette poudre, stockée sous atmosphère inerte (azote par exemple) ou sous air, sera utilisée dans la fabrication d'une couche catalytique (ou hydrophile) d'une électrode à diffusion gazeuse destinée à la production de peroxyde d'hydrogène en la mélangeant avec d'autres éléments constitutifs, à savoir du Vulcan® XC-72R et un liant, ici du PTFE.

Lors de la fabrication de l'électrode à diffusion gazeuse, ladite poudre catalytique mère sera mélangée à du Vulcan® XC-72R en dilution jusqu'à obtention de la teneur désirée en CoTMPP. Les teneurs en CoTMPP de l'électrode sont ci-après données en teneur de Co.

### 1 b) Fabrication de l'électrode à diffusion gazeuse

Pour fabriquer 400 cm² d'électrode à diffusion gazeuse catalysée avec 5 µg de Co/cm², il faut 1 g de poudre catalytique mère (contenant 0.2 % en masse de Co et préparée selon les conditions décrites au point la), mélangé à 8 g de Vulcan® XC-72R plus 1 g de PTFE.

Pour fabriquer 400 cm² d'électrode à diffusion gazeuse catalysée avec 1,15 µg de Co/cm², il faut 0,23 g de poudre catalytique mère (contenant 0.2 % en masse de Co et préparée selon les conditions décrites au point la), mélangé à 8 g de Vulcan® XC-72R plus 1 g de PTFE.

### Exemple 2 : comparaison entre le catalyseur de la demande de brevet américain US 2003/0019758 A1 (GOPAL) et le catalyseur CoTMPP (selon l'invention).

Le procédé décrit dans la demande de brevet US 2003/0019758 A1 mentionne l'utilisation des électrodes à diffusion gazeuse contenant des catalyseurs rédox. Parmi les matériaux testés dans ce brevet, seul celui à base d'azobenzene associé au poly 4-vinylpyridinium para-tolenesulfonate ou PTPPTS, supporté par du Vulcan® XC 72R, a permis d'obtenir une concentration en peroxyde d'hydrogène de 2,2 mol.1⁻¹.

Les conditions générales appliquées dans le cadre de cette demande de brevet sont les suivantes :
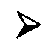 Surface de travail : 6,4 cm² ;
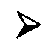 Densité de courant appliquée est située entre 0,02 à 0,1 A.cm⁻² (soit une intensité de courant de 0,003 à 0,64 A);
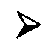 Cellule à 2 compartiments séparée par une membrane échangeuse d'ions (Nafion® 115) ;
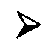 Distance inter-électrode est de 4 mm ;
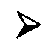 Compartiment cathodique est relié à un réservoir pouvant contenir un volume d'électrolyte de 30 à 60 ml ;
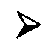 Compartiment anodique relié à un réservoir pouvant contenir un volume d'électrolyte de 200 ml ;
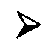 Anolyte et catholyte identiques et constitués d'une solution acide sulfurique (H₂SO₄) de concentration de 0,1 à 2 N injectée respectivement dans les deux compartiments de la cellule d'électrolyse.

La concentration en peroxyde d'hydrogène de 2,2 mol.1⁻¹ a été obtenue après 28 heures d'électrolyse sous une densité de courant de 0,1 A.cm⁻² (I = 0,64 A puisque la surface de travail est de 6,4 cm²) avec un volume de catholyte probablement de 60 ml (0,06 1). A partir de ces données, le nombre de mole de H₂O₂ produit n'est que de l'ordre de 0,132 mole. Ce qui correspond à une quantité massique de l'ordre de 4,5 g (la masse molaire de H₂O₂ est de 34 g.mol-1). Selon la loi de Faraday, la quantité de H₂O₂ théoriquement formée devrait être aux alentours de 11,36 g. Ce qui donne un rendement faradique global de 40%.

En ce qui concerne la consommation électrique rapportée à la quantité massique de H₂O₂ produite, les données décrites dans ladite demande de brevet US 2003/0019758 A1 montrent que la tension aux bornes de la cellule d'électrolyse est de 2,5 V pour une intensité appliquée de 0,64 A. Ce qui correspond à une consommation électrique spécifique de l'ordre 9,96 Wh/g de H₂O₂ (soit environ 9,9 kWh/kg de H₂O₂).

Les résultats selon l'invention ont été obtenus dans une cellule à deux compartiments, telle que représentée sur les figures 2 et 3, séparée par une membrane échangeuse d'ions avec une électrode à diffusion gazeuse contenant 1,15 ou 5 µg de Co.cm⁻². La surface de travail de l'électrode à diffusion gazeuse est de 3,14cm2. La densité de courant appliquée est fixée à 0,15 A.cm⁻² (soit une intensité de courant appliquée de 0,471 A contre 0,64 A dans le cas de la demande de brevet US 2003/0019758 A1). Les deux compartiments de la cellule d'électrolyse sont alimentés par un électrolyte constitué par une solution NaOH à 75 g.1⁻¹ (1,875 mol.l⁻¹). La distance inter-électrodes est de 10 mm. Chacun des 2 compartiments peut contenir 500 ml d'électrolyte.

Sur la figure 5 ci-après sont reportées les évolutions constatées de la concentration CC (g.l⁻¹) en H₂O₂ en fonction de la durée D(h) de l'électrolyse pour deux quantités différentes de CoTMPP, mesurées en quantité de Co, sur les électrodes à diffusion gazeuse (5 µg Co.cm⁻² et 1,15 µg Co.cm⁻²).

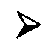 Cathode à diffusion gazeuse contenant 5 µg Co.cm⁻²

L'examen de la courbe A(▲) correspondant à 5 µg Co.cm⁻² montre, pour une durée d'électrolyse égale à 28 h (même durée que dans le cas de la demande de brevet US 2003/0019758 A1), qu'une concentration en H₂O₂ de 11,61 g.l⁻¹ est obtenue. Le volume de catholyte est égal à 500 ml. Ce qui correspond à une quantité massique de H₂O₂ produit de 5,80 g pour une durée d'électrolyse de 28 heures. Selon la loi de Faraday, la quantité massique de H2O2 produit est théoriquement de 8,36 g. Ce qui donne un rendement faradique global de la production de H₂O₂ selon l'invention de l'ordre de 69% contre 40% dans le cas de la demande de brevet US 2003/0019758 A1.

La valeur de la tension aux bornes de la cellule d'électrolyse est de 1,97 à 2,05 V (contre 2,5 V dans le cas de la demande de brevet US 2003/0019758 A1) pour une intensité de courant de travail de 0,471 A soit une densité de courant appliquée de 150 mA.cm⁻² (contre 0,64 A soit une densité de courant appliquée de 100 mA.cm⁻², dans le cas de la demande de brevet US 2003/0019758 A1).

En matière de consommation électrique rapportée à la quantité de H₂O₂ produit, elle est de l'ordre de 4,7 kWh/kg contre 9,9 kWh/kg dans le cas de la demande de brevet US 2003/0019758 A1.

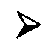 Cathode à diffusion gazeuse contenant 1,15 µg Co.cm⁻².

La courbe B(■) relative à la cathode à diffusion gazeuse catalysée avec 1,15 µg Co.cm⁻² montre, qu'à une durée égale à 28 heures (même durée que la demande de brevet US 2003/0019758 A1), la concentration en peroxyde d'hydrogène est de 10,93 g.l⁻¹. Pour un volume de catholyte de 500 ml, la quantité massique de H₂O₂ produite est de 5,46 g contre 4,5 g obtenue dans le cas de la demande de brevet US 2003/0019758 A1. Selon la loi de Faraday, la quantité massique de H₂O₂ produite est théoriquement de 8,36 g. Ce qui correspond à un rendement faradique global de production de H₂O₂ selon l'invention de 65 % contre 40 % dans le cas de la demande de brevet US 2003/0019758 A1.

La tension aux bornes de la cellule d'électrolyse pour une intensité de courant de travail égale à 0,471 A est de 1,97 V contre 2,5 V dans le cas de la demande de brevet US 2003/0019758 A1 (Intensité de courant de travail est égale à 0,64 A).

En ce qui concerne la consommation électrique rapportée à la quantité de H₂O₂ produite, elle est, dans ce cas selon l'invention, égale à 4,76 kWh/kg de H₂O₂ contre 9,9 kWh/kg dans le cas de la demande de brevet US 2003/0019758 A1.

Les deux expériences précédentes selon l'invention montrent, sur une durée d'électrolyse assez courte (28 heures), que l'augmentation de la quantité de catalyseur (Co, N, C) n'a que très peu d'influence sur la quantité de H₂O₂ produit (5,46 g de H₂O₂ pour 1,15 µg Co.cm⁻² et 5,80 g de H₂O₂ pour 5 µg Co.cm⁻²). Par contre, pour une durée d'électrolyse supérieure à 30 heures, la cathode à diffusion gazeuse contenant 1,15 µg Co.cm⁻² permet d'obtenir une quantité de H₂O₂ plus importante que celle contenant 5 µg Co.cm⁻².

Par rapport à la demande de brevet US 2003/0019758 A1, les résultats selon l'invention sont nettement meilleurs aussi bien sur le plan de productivité que sur le plan de consommation électrique, à durée d'électrolyse égale. Ils sont résumés dans le tableau B ci-après :

**TABLEAU B**

| | **Durée d'électrolyse = 28 heures** | | |
|---|---|---|---|
| **Paramètres de comparaison** | **Demande de brevet US 2003/0019758 A1 (Comparatif)** | **Procédé selon l'invention avec électrode contenant 1,15 µg Co.cm**^{**-2**} | **Procédé selon l'invention avec électrode contenant 5 µg Co.cm**^{**-2**} |
| Surface de travail (cm²) | 6,4 | 3,14 | 3,14 |
| Intensité de courant appliquée (A) | 0,64 | 0,471 | 0,471 |
| Quantité de H₂O₂ produit (g) | 4,50 | 5,46 | 5,80 |
| Rendement faradique global sur 28 heures (%) | 40 | 65 | 69 |
| Consommation électrique globale (kwh/kg de H₂O₂) | 9,9 | 4,76 | 4,70 |

La performance des dispositif et procédé de production électrochimique de peroxyde d'hydrogène selon l'invention mettant en oeuvre la technologie des cathodes à diffusion gazeuse catalysées avec un matériau à base de Co, N et C est supérieure à celle décrite dans la demande de brevet américain référencé US 2003/0019758 A1. L'invention permet donc de produire plus de H₂O₂ tout en consommant moins d'énergie.

### Exemple 3 : Détermination de la teneur optimale en CoTMPP (cas du premier catalyseur)

### a) Préparation des catalyseurs (selon l'invention et comparatif)

Le support carboné utilisé est du Vulcan® XC-72 R de Cabot. C'est une poudre de carbone de haute surface spécifique (250 m²/g) avec un contenu très faible en fer (0,002 % de poids). La première étape de la préparation du catalyseur est un prétraitement du support carboné par pyrolyse sous un gaz inerte (argon). La poudre de carbone est déposée dans un récipient en quartz qui est inséré dans un tube de quartz de 5 cm de diamètre. Le traitement thermique est effectué dans un four tubulaire sous flux d'argon (12 L/h, O₂ < 5 ppm, H₂O₂ < 4 ppm) à 900 °C pendant 2 heures. La poudre ainsi traitée est refroidie à la température ambiante sous le même flux d'argon.

Le porphyrine de cobalt est la 5,10,15,20 tetrakis(4-methoxyphenyl)21H,23H-cobalt^{II} porphyrine, notée CoTMPP, de la société Aldrich. La porphyrine CoTMPP est dissoute dans 50 mL d'acétone avec 1 g de poudre de carbone prétraité. Différentes suspensions catalytiques ont été préparées selon les proportions données dans le tableau C suivant:

**TABLEAU C**

| | Quantité de poudre de carbone (Vulcan XC-72R pyrolysé) | Quantité de CoTMPP dissoute dans 50 mL d'acétone | Teneur en CoTMPP (% Co en poids)* |
|---|---|---|---|
| Cat. A (C) | 1 g | 0 mg | 0 % |
| Cat. B (I) | 1 g | 13,5 mg | 0,1 % |
| Cat. C (I) | 1 g | 27 mg | 0,2 % |
| Cat. D (I) | 1 g | 67,5 mg | 0,5 % |
| Cat. E (C) | 1 g | 135 mg | 1,0 % |

| | | | |
|---|---|---|---|
| ** les teneurs en CoTMPP sont exprimées en % massique de Co versus la masse de support carboné avant la dernière étape de pyrolyse menant au catalyseur.* | | | |
| (I) : selon l'invention ; | | | |
| (C) : comparatif | | | |

La suspension est laissée sous agitation magnétique pendant 2 heures à la température ambiante. Ensuite, le solvant est évaporé sur une plaque chauffante à 50°C puis le catalyseur est séché dans un four à 70 ° C pendant 12 heures. Cette poudre (CoTMPP adsorbée sur le support carboné prétraité) est pyrolysée à 900 °C pendant 2 heures sous argon et refroidie à la température ambiante sous le même flux d'argon (12 L/h, O₂ < 5 ppm, H₂O₂ < 4 ppm).

La suspension catalytique est préparée en ajoutant 10 mg de la poudre de catalyseur à 98 µL d'une solution eau-alcool contenant 5 % de Nafion® (société Aldrich) et 350 µL d'un mélange eau-éthanol (20:80 en volume). Le mélange est mis pendant 30 minutes dans un bain à ultrason pour homogénéisation.

### b) Préparation des électrodes à diffusion gazeuse (selon l'invention et comparatif)

Les électrodes à diffusion gazeuse (EDG) ont été préparées en utilisant un tissu carboné ELAT® commercialisé par la société E-TEK Inc. Il s'agit d'un tissu carboné de 0,36 mm d'épaisseur avec une face hydrophile (en contact avec l'électrolyte) et une face rendue hydrophobe par du polytétrafluoroéthylène (en contact avec le gaz). La suspension catalytique est dispersée sur la face hydrophile du tissu carboné (diamètre de 1 cm) en utilisant une micropipette. Un premier dépôt de 10 µL est effectué puis séché à la température ambiante pendant quelques minutes avant l'application d'un deuxième dépôt de 10 µL. Selon la teneur en CoTMPP du catalyseur dans la suspension, la quantité de cobalt sur l'EDG est comprise entre 0,45 µg/cm² (pour le catalyseur selon l'invention contenant 0,1% en poids de Co) et 4,5 ug/cm² (pour le catalyseur comparatif contenant 1,0 % en poids de Co).

Le tissu carboné ainsi préparé est inséré dans l'électrode de travail décrite sur la figure 6. L'électrode est alimentée en gaz (mélange 20 % O₂ / 80 % N₂) à un débit de 1,8 L/h sous la pression atmosphérique. La superficie de l'électrode EDG en contact avec l'électrolyte et le gaz est de 12,6 mm² (4 mm de diamètre). Une cellule en verre à deux compartiments et trois électrodes contenant 20 mL d'une solution H₂SO₄ 0,1 mol/L est utilisée. L'électrode de référence est une électrode au calomel saturée (ECS) et la contre-électrode est un fil de platine séparé de l'électrode de travail par une membrane de Nafion®.

### c) Résultats

La figure 7 représente des courbes de polarisation en milieu H₂SO₄ (0,1 mol/L) sur électrode à diffusion gazeuse contenant différentes teneurs en Cobalt.

Afin de déterminer l'efficacité des différents catalyseurs pour la réaction de réduction de l'oxygène (RRO), les courbes de polarisation (présentées sur la figure 7) ont été enregistrées à 2 mV/s de 0,3 V à -0,3 V vs. ECS. Les courants de réduction observés sont associés à la RRO et augmentent continuellement quand le potentiel appliqué diminue. Ceci indique que le RRO n'est pas limitée par la diffusion de l'oxygène dans la gamme de potentiel explorée. La figure 7 montre clairement une augmentation de l'activité électrocatalytique de l'EDG pour la RRO lorsque le contenu en cobalt au sein du catalyseur augmente. Cependant, une saturation de l'activité électrocatalytique pour la RRO est observée lorsque la teneur en cobalt atteint 1 %.

Afin de déterminer l'efficacité des différents catalyseurs pour la production de peroxyde d'hydrogène, des électrolyses d'une durée d'une heure à courant constant (-8 mA/cm²) ont été réalisées. La concentration de H₂O₂ dans la solution d'électrolyte a été déterminée par titration avec une solution de KMnO₄. Les résultats obtenus sont présentés dans le tableau D ci-dessous :

**TABLEAU D**

| | *0 % Co (C)* | *0,1 % Co (I)* | *0,2 % Co (I)* | *0*,*5 % Co (I)* | *1 % Co (C)* |
|---|---|---|---|---|---|
| E (mV vs. ECS) Rendement faradique pour la production de H₂O₂ (%)* | -434 | -120 | -17 | 0 | 30 |
| | 75 | 88 | 95 | 85 | 78 |

| | | | | | |
|---|---|---|---|---|---|
| ** les rendements faradiques sont déterminés à partir de la quantité de H*_{*2*}*O*_{*2*} *produite versus la charge appliquée durant l'électrolyse.* | | | | | |

Le rendement faradique le plus élevé (95 %) est obtenu avec le catalyseur contenant 0,2 % de cobalt. Au-delà de cette valeur, on observe une augmentation de l'efficacité électrocatalytique de l'EDG pour la réduction de l'oxygène (illustrée par une diminution du potentiel mesuré), mais au détriment de sa sélectivité pour la formation de H₂O₂ (illustrée par une diminution du rendement faradique pour la production de H₂O₂). On remarquera que le Vulcan® XC-72R non catalysé (0 % Co) a un rendement de seulement 75 % obtenu à un potentiel de -434 mV, c'est-à-dire un potentiel beaucoup plus négatif que ceux mesurés avec les matériaux catalysés (par exemple, -17 mV pour l'échantillon contenant 0,2 % de Co). Ceci confirme l'influence très positive du CoTMPP pyrolysé sur les performances de l'EDG pour la production de H₂O₂.

La figure 8 représente des courbes de vitesses de production (Vₚ) d'eau et de peroxyde d'hydrogène après une heure d'électrolyse à -150mV/ECS, en milieu H₂SO₄ (0,1 mol/L) sur électrode à diffusion gazeuse contenant différentes teneurs en Cobalt. Ces vitesses de production ont été déterminées à partir des charges développées et des quantités de H₂O₂ produites durant l'électrolyse. Les résultats obtenus montrent que le catalyseur le plus performant est le catalyseur selon l'invention contenant 0,2 % de Co. Sa vitesse de production de H₂O₂ est de 300 µmol h⁻¹ cm⁻² comparé à seulement 60 µmol h⁻¹ cm⁻² pour le Vulcan® XC-72R non catalysé. Les catalyseurs ayant une teneur en Co supérieure à 0,2 %, et surtout supérieure à 0,5%, présentent également des vitesses de production de H₂O₂ élevées mais une augmentation de leur vitesse de production d'eau est observée, ce qui signifie une diminution de leur efficacité faradique pour la production de peroxyde d'hydrogène. On peut donc conclure qu'une des meilleures EDG pour la production de H₂O₂ selon l'invention est celle préparée avec l'électrocatalyseur ayant une teneur en Co sensiblement de 0,2 %.

### Exemple 4 : catalyseur préparé à partir d'acétate de cobalt pyrolysé en présence d'ammoniac (selon l'invention)

### a) Préparation de l'électrode à diffusion gazeuse

Le support carboné utilisé est du Vulcan® XC-72 R de la société Cabot ayant subi une première pyrolyse sous argon à 900 ° C pendant 2 heures. 1 g de cette poudre de carbone prétraité est mis en suspension dans 50 ml d'eau déionisée contenant 211 mg d'acétate de cobalt Co(CH₃COO)₂. 4 H₂O, notée CoAc, de la société Fisher Scientific. La suspension est laissée sous agitation magnétique pendant 2 heures à la température ambiante. Le solvant est par la suite évaporé sur une plaque chauffante à une température proche de l'ébullition (80-90°C) puis la poudre catalytique est séchée dans un four à 70 ° C pendant 12 heures. Cette poudre est pyrolysée à 900 °C pendant 2 heures en présence d'un mélange Ar : H₂ : NH₃ (2 : 1 : 1) à un débit de 12 L/h puis est refroidie à la température ambiante sous argon.

La suspension catalytique est préparée en ajoutant 10 mg de la poudre catalytique à 98 µL d'une solution eau-alcool contenant 5 % de Nafion® (société Aldrich) et 350 µL d'un mélange eau-éthanol (20:80 en volume). Le mélange est mis pendant 30 minutes dans un bain à ultrason pour homogénéisation.

La suspension catalytique est dispersée sur la face hydrophile d'un tissu carboné ELAT® (diamètre de 1 cm) en utilisant une micropipette. Un premier dépôt de 10 µL est effectué puis séché à la température ambiante pendant quelques minutes avant l'application d'un deuxième dépôt de 10 µL. La quantité de cobalt déposée sur l'EDG est de 22,5 µg/cm².

Le tissu carboné ainsi préparé est inséré dans l'électrode de travail (100) décrite sur la figure 6. L'électrode est alimentée en gaz (mélange 20 % O₂ / 80 % N₂) à un débit de 1,8 L/h sous la pression atmosphérique. La superficie de l'électrode EDG en contact avec l'électrolyte et le gaz est de 12,6 mm² (4 mm de diamètre). Une cellule en verre à deux compartiments et trois électrodes contenant 20 mL d'une solution H₂SO₄ 0,1 mol/L est utilisée. L'électrode de référence est une électrode au calomel saturée (ECS) et la contre-électrode est un fil de platine séparé de l'électrode de travail par une membrane de Nafion®.

### b) Résultats

La figure 9 représente des courbes de polarisation (2 mV/s) en milieu H₂SO₄ (0,1 mol/L) sur électrode à diffusion gazeuse (100) selon l'invention (cf. figure 6) catalysée avec acétate de cobalt / Vulcan® XC-72R pyrolysé sous NH3 (113) vs. électrode à diffusion gazeuse (100) selon l'invention (cf. figure 6) catalysée avec CoTMPP/ Vulcan® XC-72R pyrolysé sou argon (112).La figure 9 compare la courbe de polarisation (113) d'une EDG préparée selon le protocole décrit précédemment dans l'exemple 4 a) (CoAc/ Vulcan® XC-72R (5,0 % Co) pyrolysé en présence d'ammoniac) avec celle (112) d'une EDG préparée selon le protocole décrit dans l'exemple 3 (CoTMPP/ Vulcan® XC-72R (0,2 % Co) pyrolysé en présence d'argon). La figure 9 montre clairement que le catalyseur préparé à partir d'acétate de Co (deuxième catalyseur selon l'invention) a une activité électrocatalytique pour la réduction de l'oxygène comparable voire légèrement supérieure (aux fortes surtensions) à celle du catalyseur (premier catalyseur selon l'invention) préparé à partir de CoTMPP (0,2 % Co).

La performance pour la production de peroxyde d'hydrogène du catalyseur préparé à partir de CoAc a été mesurée lors d'une électrolyse d'une durée d'une heure à courant constant (-8 mA/cm²). Son rendement faradique pour la production de H₂O₂ (déterminé à partir de la quantité de H₂O₂ produite versus la charge appliquée durant l'électrolyse) est de 98 % et la tension mesurée est de -5 mV vs. ECS, soit une efficacité comparable à celle mesurée dans les mêmes conditions avec l'un des meilleurs catalyseurs à base de CoTMPP contenant 0,2 % en poids de Co (rendement faradique de 95 %, E = -17 mV à -8 mA/cm², voir exemple 3).

## Revendications

1. Electrode (2,100), de préférence cathode, à diffusion gazeuse comprenant au moins une couche catalytique, au moins une couche support et au moins une couche hydrophobe, la couche support s'intercalant entre la couche catalytique et la couche hydrophobe, la couche catalytique comprenant au moins un catalyseur comprenant un dérivé de 5,10,15,20 tétrakis (4-méthoxyphényl) 21H, 23H Porphyrine Cobalt II (ou CoTMPP, **caractérisé en ce que** la teneur en CoTMPP, en masse de cobalt sur le carbone, est inférieure ou égale à 0,5%, de préférence strictement supérieure à 0 et au plus égale à 0,5%, de façon encore plus préférée strictement supérieure à 0 et au plus égale à 0,2%.

2. Electrode (2,100), de préférence cathode, à diffusion gazeuse comprenant au moins une couche catalytique, au moins une couche support et au moins une couche hydrophobe, la couche support s'intercalant entre la couche catalytique et la couche hydrophobe, **caractérisée en ce que** la couche catalytique comprend au moins un catalyseur à base de cobalt (Co), azote (N) et carbone (C), fabriqué à partir d'au moins un composant comprenant du cobalt et ne contenant pas d'azote, de préférence ledit composant comprenant l'un au moins des composés suivants : CoCl₂, CoCO₃, Co(OH)₂, CoSO₄, CoAc, de façon encore plus préférée ledit composant comprenant de l'acétate de cobalt (CoAc).

3. Dispositif de production de peroxyde d'hydrogène H₂O₂, ledit dispositif comprenant au moins une cellule électrochimique qui comporte une anode et une cathode (2,100), ladite cellule électrochimique étant une cellule à deux compartiments, à savoir respectivement le compartiment anodique et le compartiment cathodique, lesdits compartiments étant chacun empli d'un électrolyte aqueux, appelés respectivement anolyte et catholyte, et étant séparés par au moins une membrane échangeuse d'ions, ledit dispositif étant **caractérisé en ce que** ladite cathode est une électrode à diffusion gazeuse selon l'une des revendications 1 ou 2.

4. Dispositif selon la revendication précédente tel que l'anolyte et le catholyte sont, chacun indépendamment l'un de l'autre, choisis dans le groupe formé par la soude, la potasse et l'acide sulfurique.

5. Dispositif selon l'une des revendications 3 ou 4 dans lequel l'anode est une anode massive ou une anode DSA.

6. Dispositif selon l'une des revendications 3 à 5 comprenant au moins un conduit d'alimentation d'au moins une source gazeuse d'oxygène gazeux et au moins un conduit de sortie de gaz.

7. Dispositif selon l'une des revendications 3 à 6 tel que la membrane échangeuse d'ions est choisie dans le groupe formé par les membranes échangeuses de cations du type Nafion® 115, Nafion® 117 et Neosepta AHA®.

8. Procédé de réalisation d'un dispositif selon l'une des revendications 3 à 7 comprenant la fabrication de l'électrode à diffusion gazeuse, ladite fabrication comprenant l'incorporation du catalyseur dans une couche catalytique de l'électrode à diffusion gazeuse.

9. Procédé de production de peroxyde d'hydrogène comprenant la mise en oeuvre du dispositif selon l'une des revendications 3 à 7 ou fabriqué selon la revendication 8, en milieu alcalin ou en milieu acide, de préférence en milieu alcalin.
